# FASCICULE DE BREVET EUROPEEN

(11) **EP 4 359 856 B1**
(45) Date de publication et mention de la délivrance du brevet: **20.05.2026**
(21) Numéro de dépôt: 22734010.6
(22) Date de dépôt: 23.06.2022
(51) Int. Cl.: G02C 5/14, G02C 5/22

(54) **PAIRE DE LUNETTES COMPRENANT DES ARTICULATIONS DÉCALÉES LONGITUDINALEMENT**
BRILLE MIT IN LÄNGSRICHTUNG VERSETZTEN SCHARNIEREN
PAIR OF SPECTACLES COMPRISING LONGITUDINALLY OFFSET HINGES

(30) Priorité: 23.06.2021 FR 2106721; 28.06.2021 WO PCT/EP2021/067752
(43) Date de publication de la demande: 01.05.2024
(73) Titulaire: Miklitarian, Alain, 78490 Boissy Sans Avoir (FR); Chene, Richard, 92200 Neuilly (FR); Delamour, Dominique, 92200 Neuilly (FR)
(72) Inventeur: Miklitarian, Alain, 78490 Boissy Sans Avoir (FR); Chene, Richard, 92200 Neuilly (FR); Delamour, Dominique, 92200 Neuilly (FR)
(74) Mandataire: Argyma
(86) Numéro de dépôt international: PCT/EP2022/067223
(87) Numéro de publication internationale: WO 2022/268978

(56) Documents cités:
- US-A- 5 426 473
- US-A- 5 875 016
- US-A1- 2013 044 287

## Description

### DOMAINE TECHNIQUE

La présente invention concerne le domaine des paires de lunettes.

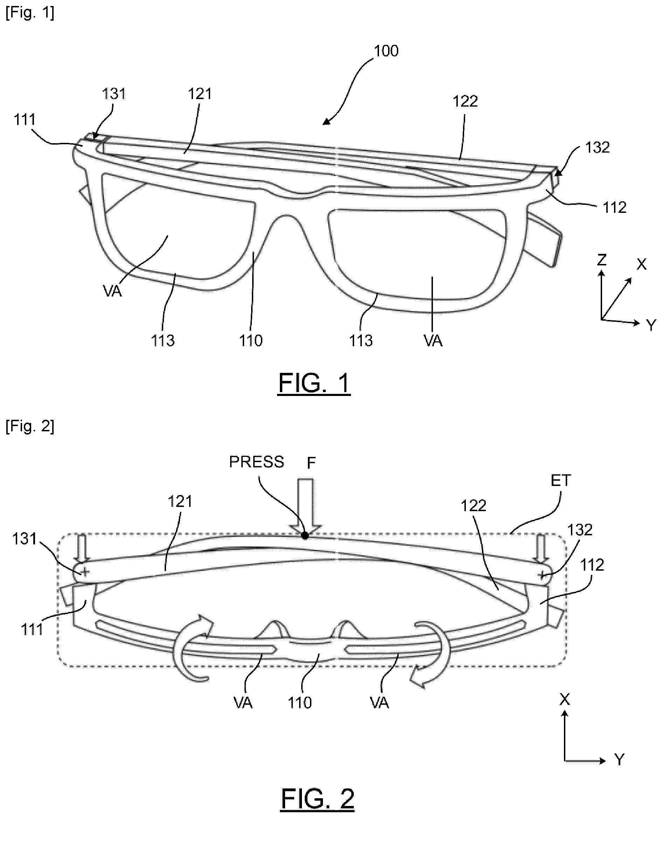

De manière connue, en référence à la figure 1, une paire de lunettes 100 comprend des verres VA. Les verres VA peuvent être de différentes natures, en particulier, de vue, fantaisie, temporaires, de présentation, etc. Dans cet exemple, la paire de lunettes est présentée dans un repère référentiel (X, Y, Z) dans lequel l'axe X s'étend longitudinalement d'avant en arrière, l'axe Y s'étend latéralement de la gauche vers la droite et l'axe Z s'étend verticalement du bas vers le haut.

La paire de lunettes 100 comprend une face avant 110, s'étendant globalement dans le plan (Y, Z), comprenant deux verres VA ainsi qu'un premier tenon 111 et un deuxième tenon 112 qui sont reliés à la face avant 110.

La paire de lunettes 100 comprend en outre une branche droite 121 et une branche gauche 122 qui sont respectivement reliées au tenon droit 111 et au tenon gauche 112 par l'intermédiaire d'une articulation droite 131 et d'une articulation gauche 132. Ainsi, chaque branche latérale 121, 122 peut se déplacer entre une position pliée de rangement dans laquelle la branche latérale 121, 122 est sensiblement alignée avec la face avant 110 (voir figure 1) et une position dépliée d'utilisation dans laquelle la branche latérale 121, 122 est sensiblement orthogonale à la face avant 110. Lorsque la paire de lunettes 100 est pliée, les branches 121, 122 viennent se placer l'une derrière l'autre par rapport à l'axe X. De manière connue, une paire de lunettes 100 est symétrique de manière à ce que le confort de l'utilisateur soit identique de chaque côté du visage de l'utilisateur lors du port de la paire de lunettes PA.

Pour protéger une paire de lunettes PA, il est connu de ranger cette dernière dans un étui ET comme illustré de manière schématique à la figure 2. Lors de son stockage, un étui ET peut être comprimé dans une veste ou dans un sac. Lors de cette compression, un effort de compression longitudinal F s'applique sur les branches 121, 122 en position pliée. De manière plus précise, un effort de compression longitudinal s'applique selon un point de pression PRESS sur la branche latérale la plus en arrière (ici la branche gauche 122) qui est transmis à la branche latérale la plus en avant (ici la branche droite 121) étant donné que les branches 121, 122 sont superposées. L'effort de compression longitudinal F se transmet ensuite aux tenons 111, 112 qui viennent déformer la face avant 110. La face avant 110 est alors voilée et ne possède plus sa forme d'origine. Une telle déformation modifie la position des verres dans leur rapport avec le regard de l'utilisateur, dégradant la correction optique apportée, ce qui est une source d'inconfort ophtalmique pour l'utilisateur. La déformation présente également un désavantage esthétique certain. De plus, les axes des articulations 131, 132 peuvent également être déformés, ce qui perturbe la fermeture des branches 121, 122. Ce contact entre les branches, appelé aussi « ripage », présente de nombreux inconvénients. La probabilité d'une déformation indésirable est par ailleurs plus élevée lors de fortes chaleurs étant donné que la matière formant la monture est sensible aux températures élevées, en particulier, une monture en acétate.

Cette déformation peut survenir lorsque la paire de lunettes PA est rangée dans tout type d'étui ET (souple ou rigide). La déformation peut également survenir lors de la fermeture du couvercle de l'étui ET qui vient compresser la paire de lunettes PA. De telles compression s'appliquent également lorsque la paire de lunette PA n'est pas rangée dans un étui ET mais, par exemple, glissée dans un vêtement. Une solution immédiate pour résoudre cet inconvénient serait de rendre la paire de lunettes PA très rigide pour éviter sa déformation mais cela augmente son volume et affecte le confort de l'utilisateur. Une telle solution ne peut ainsi pas être retenue.

De manière incidente, on connaît dans l'art antérieur plusieurs solutions de pliage des branches permettant de limiter l'encombrement d'une paire de lunettes mais ces solutions ne permettent pas de limiter la déformation de la face avant. On connaît en particulier, par la demande de brevet US8192017B2, une paire de lunettes dont les branches latérales sont articulées avec la face avant avec un jeu de déplacement vertical de manière à permettre aux branches de se positionner l'une au-dessus de l'autre en position de rangement. La superposition des branches est évitée mais l'effort de compression longitudinal est néanmoins transmis indépendamment par chacune des branches latérales à la face avant qui se déforme.

Il existe ainsi un besoin pour une nouvelle paire de lunettes dont la face avant est peu susceptible de se déformer, en particulier, lorsque la paire de lunettes est comprimée longitudinalement. Un autre objectif de la présente invention est de ne pas impacter le coût de fabrication d'une paire de lunettes.

On connaît dans l'art antérieur la demande de brevet US2013/0044287A qui présente une paire de lunettes pouvant être utilisée comme marque-page. Les branches de la paire de lunettes sont rectilignes et étroites de manière à permettre de fermer le livre sans tordre la branche de lunettes. En outre, les verres doivent être étroits pour ne pas s'étendre à l'extérieure de la reliure d'un livre.

On connaît dans l'art antérieur la demande de brevet US5875016 qui présente une paire de lunettes qui permet de réduire l'apparition de buée et de limiter la gêne par rapport au vent lors de la pratique du snowboard. Afin d'améliorer la protection contre le vent, la face avant est incurvée et asymétrique de manière à apporter une protection renforcée d'un côté de la face avant.

On connaît dans l'art antérieur la demande de brevet US5426473 qui présente une paire de lunettes de sécurité dont les articulations des branches sont ajustables selon trois positions.

### PRESENTATION DE L'INVENTION

A cet effet, l'invention concerne une paire de lunettes, s'étendant selon un premier axe longitudinal d'arrière en avant, comprenant :
- une face avant comprenant deux verres,
- un premier tenon et un deuxième tenon qui sont reliés à la face avant,
- une première branche et une deuxième branche qui sont respectivement reliées au premier tenon et au deuxième tenon par l'intermédiaire d'une première articulation et d'une deuxième articulation.

L'invention est remarquable en ce que les positions longitudinales des articulations sont différentes afin de limiter le risque de déformation de la face avant suite à un effort de compression longitudinal.

Ainsi, de manière avantageuse, les deux branches sont pliées dans des plans différents, à distance l'une de l'autre de manière à limiter ou éviter la transmission d'un effort de compression longitudinal entre deux branches. La face avant ne subit ainsi pas d'efforts en plusieurs points et ne se déforme pas même si sa rigidité est faible. La deuxième branche remplit une fonction d'amortisseur mécanique et vient amortir tous les efforts de compression. Les efforts de ripage, présents dans l'art antérieur, sont considérablement réduits.

De manière avantageuse, la durée de vie de la paire de lunettes est augmentée et la face avant peut être amincie pour diminuer sa rigidité. Une face avant amincie permet de créer des paires de lunettes avec des contraintes plus faibles, en particulier, des branches de formes originales. En position pliée, la paire de lunettes est sécurisée dans son étui. De manière avantageuse, l'invention s'applique aussi bien pour des faces avant épaisses que fines en permettant d'éviter une déformation.

Le positionnement des verres est pérenne au cours du temps, ce qui améliore le confort de l'utilisateur. Sur le plan industriel, il suffit uniquement de modifier la longueur des tenons, ce qui n'engendre pas de surcoût.

En proposant une paire de lunettes ayant une structure asymétrique, la Demanderesse vainc un préjugé répandu dans l'optique qui impose qu'une paire de lunettes possède une structure symétrique pour assurer le confort de l'utilisateur lors du port de la paire de lunettes et assurer un aspect esthétique. Grâce à l'invention, la paire de lunettes conserve son aspect esthétique en position dépliée tout en étant résistante aux déformations en position pliée. Les fonctionnalités de la paire de lunettes sont améliorées par rapport à l'art antérieur.

De préférence, le premier tenon est plus court que le deuxième tenon de manière à ce que les positions longitudinales des articulations soient différentes afin de limiter le risque de déformation de la face avant.

Selon un aspect, la première branche est plus longue que la deuxième branche. Selon un aspect préféré, l'ensemble du premier tenon et de la première branche possède la même longueur que l'ensemble du deuxième tenon et de la deuxième branche. Ainsi, lors du port de la paire de lunettes, la paire de lunettes possède un aspect esthétique symétrique malgré sa structure asymétrique.

Selon un autre aspect, la première branche et la deuxième branche possèdent la même longueur. De préférence, la première branche et la deuxième branche sont directement en contact avec la face avant. De manière avantageuse, les tenons sont décalés par rapport aux branches et les articulations ne sont pas dans l'alignement des branches en position dépliée. Les branches sont identiques, seuls les tenons étant différents.

De préférence, la première branche ayant une épaisseur déterminée, l'écart entre les positions longitudinales des articulations est supérieur à l'épaisseur déterminée de manière à éviter un contact entre la première branche et la deuxième branche. De manière avantageuse, l'écart est déterminé en fonction de l'épaisseur de la première branche afin d'éviter tout contact. L'écartement peut ainsi être adapté sur mesure à chaque paire de lunettes.

De manière préférée, l'écart entre les positions longitudinales des articulations est compris entre 0.5 mm et 10 mm, de préférence, compris entre 1 mm et 7 mm, de préférence encore compris entre 2 mm et 5 mm. Un tel écart permet de rendre la paire de lunettes robuste aux déformations tout en limitant son encombrement longitudinal.

Selon un aspect préféré, la première branche est la branche droite. Ainsi, une paire de lunettes peut être pliée de manière intuitive par un droitier.

De préférence, la première articulation et/ou la deuxième articulation se présente sous la forme d'un mécanisme, comportant un axe d'articulation, qui est relié d'une part à la face avant et d'autre part à la première branche et/ou la deuxième branche.

L'invention concerne aussi une méthode de pliage des branches d'une paire de lunettes telle que présentée précédemment, les branches étant en position dépliée, la méthode comprenant :
- Une étape de pliage de la première branche contre la face avant puis,
- Une étape de pliage de la deuxième branche, la deuxième branche étant distante de la première branche en position pliée.

De manière alternative, l'invention concerne une paire de lunettes, s'étendant selon un premier axe longitudinal d'arrière en avant, comprenant :
- une face avant comprenant deux verres,
- un premier tenon et un deuxième tenon qui sont reliés à la face avant,
- une première branche et une deuxième branche qui sont respectivement reliées au premier tenon et au deuxième tenon par l'intermédiaire d'une première articulation et d'une deuxième articulation.

L'invention est remarquable en ce que le premier tenon est plus court que le deuxième tenon de manière à ce que les positions longitudinales des articulations soient différentes afin de limiter le risque de déformation de la face avant suite à un effort de compression longitudinal.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La figure 1 est une représentation schématique d'une paire de lunettes selon l'art antérieur.
La figure 2 est une représentation schématique de la paire de lunettes de la figure 1 en position rangée dans un étui lors d'une compression longitudinale.
La figure 3 est une représentation schématique d'une paire de lunettes selon une forme de réalisation de l'invention en position pliée.
La figure 4 est une représentation schématique de la paire de lunettes de la figure 3 lors de son pliage.
La figure 5 est une représentation schématique de dessus de la paire de lunettes de la figure 3.
La figure 6 est une représentation schématique de la paire de lunettes de la figure 3 en position rangée dans un étui lors d'une compression longitudinale.
La figure 7 est une représentation schématique d'une paire de lunettes du type « percée-clipsée » en position pliée.
La figure 8 est une représentation schématique d'une paire de lunettes du type « percée-clipsée » en position dépliée.
La figure 9 est une représentation isométrique d'une paire de lunettes du type « percée-clipsée » en position pliée.
La figure 10 est une représentation isométrique d'une paire de lunettes du type « percée-clipsée » en position dépliée.
La figure 11 est une représentation schématique d'une paire de lunettes selon une autre forme de réalisation en position pliée.
La figure 12 est une représentation schématique d'une paire de lunettes selon une autre forme de réalisation en position dépliée.

Il faut noter que les figures exposent l'invention de manière détaillée pour mettre en œuvre l'invention, lesdites figures pouvant bien entendu servir à mieux définir l'invention le cas échéant.

### DESCRIPTION DETAILLEE DE L'INVENTION

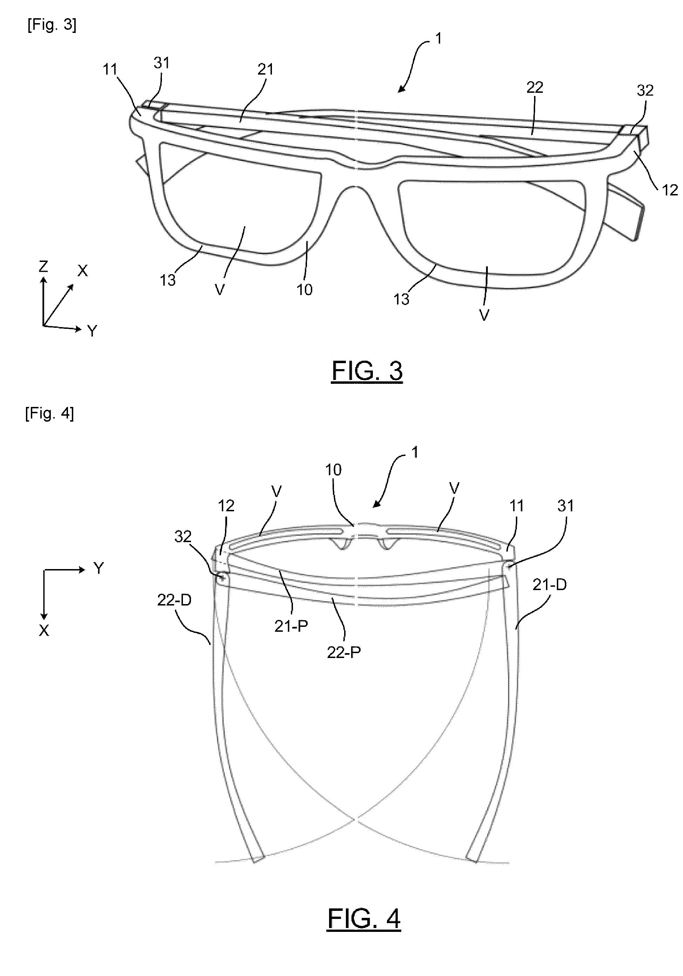

En référence à la figure 3, il est représenté une paire de lunettes P selon une forme de réalisation de l'invention.

Dans cet exemple, la paire de lunettes P est présentée dans un repère référentiel (X, Y, Z) dans lequel l'axe X s'étend longitudinalement d'avant en arrière, l'axe Y s'étend latéralement de la gauche vers la droite et l'axe Z s'étend verticalement du bas vers le haut.

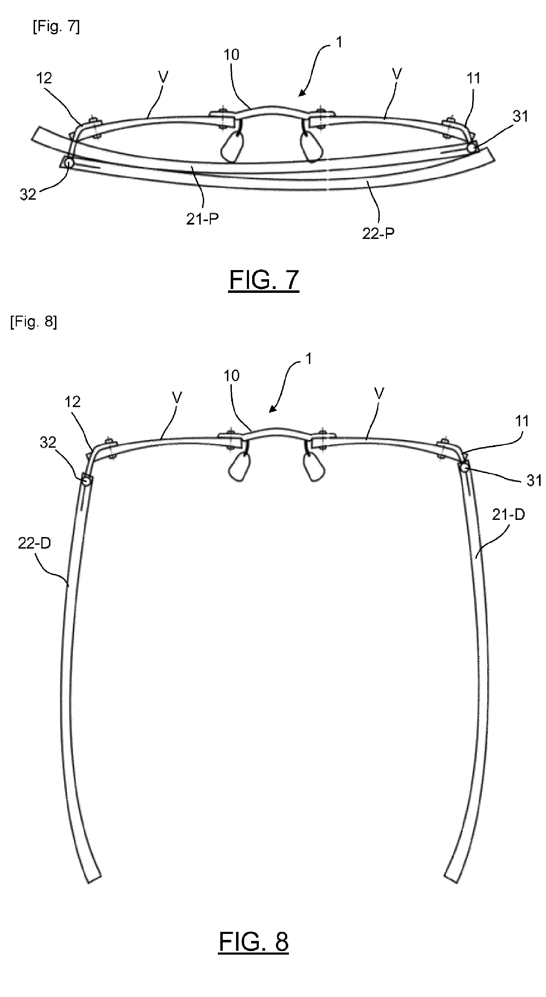

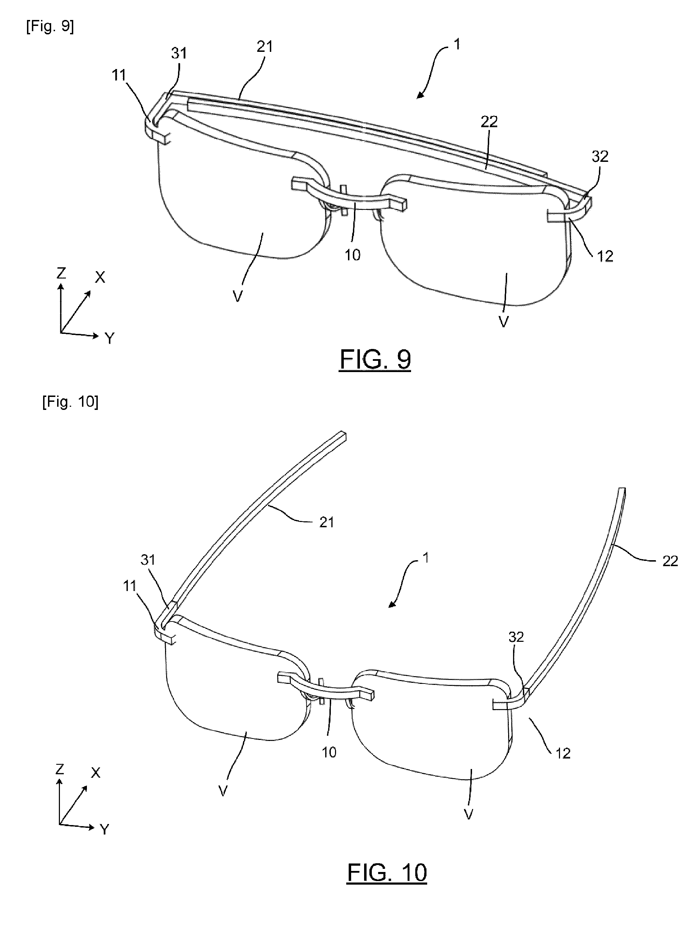

Comme illustré à la figure 3, la paire de lunettes 1 comprend une face avant 10 comprenant deux verres V. La face avant 10 peut être de natures différentes, par exemple, cerclée avec des ouvertures 13 pour les verres V (Figure 3), percée-clipsée (Figures 7 à 10) ou autre. La face avant 10 peut ainsi bien être monobloc que modulaire. De même, la face avant 10 peut être réalisé dans divers matériaux (plastique, métal, etc.), en particulier, en acétate.

La face avant est symétrique, c'est-à-dire, qu'elle possède une structure symétrique traditionnelle. Le caractère symétrique de la face avant est défini sans les tenons. De manière préférée, la face avant est sensiblement plane, c'est-à-dire, son épaisseur selon l'axe X est inférieure à 30mm, de préférence, inférieure à 20mm.

La paire de lunettes 1 comprend en outre un premier tenon 11 et un deuxième tenon 12 qui sont reliés à la face avant 10. Dans cet exemple, le premier tenon 11 est un tenon latéral droit tandis que le deuxième tenon 12 est un tenon latéral gauche. La face avant 10 possède un angle pantoscopique par rapport au plan (Y, Z) qui permet de positionner les verres V de manière optimale. Les verres V peuvent être de différentes natures, en particulier, de vue, fantaisie, solaires, temporaires, de présentation, etc.

Toujours en référence à la figure 3, la paire de lunettes 1 comporte en outre une première branche 21 (ici une branche droite) et une deuxième branche 22 (ici une branche gauche) qui sont respectivement reliées au premier tenon 11 et au deuxième tenon 12 par l'intermédiaire d'une première articulation 31 et d'une deuxième articulation 32. Grâce à son articulation 31, 32, comme illustré à la figure 4, chaque branche 21, 22 peut se déplacer entre une position dépliée D dans laquelle la branche 21, 22 s'étend selon l'axe longitudinal X et une position pliée P dans laquelle la branche 21, 22 s'étend latéralement selon l'axe Y.

La première branche 21 et la deuxième branche 22 comportent chacun une portion curviligne pour contourner l'oreille du porteur afin de proposer un confort analogue à une paire de lunettes traditionnelle. En particulier, la portion curviligne est configurée pour passer à proximité de l'os temporal pour rejoindre la partie externe/supérieure de l'oreille.

Par tenon, on entend un élément qui relie la face avant 10 à l'articulation qui permet la fermeture d'une branche, le tenon pouvant être une pièce rapportée sur la face avant 10 (c'est à dire fixée ultérieurement sur la face avant 10), ou une pièce issue de matière de la face avant 10 (c'est à dire formée en même temps que la face avant 10). Le tenon pourrait être indépendant ou intégré à l'articulation (charnière, mécanisme, gond ou autre).

Selon l'invention, les positions longitudinales des articulations 31, 32 sont différentes afin de limiter le risque de déformation de la face avant 10 suite à un effort de compression longitudinal. De préférence, le premier tenon 11 est plus court que le deuxième tenon 12 de manière à ce que les positions longitudinales des articulations 31, 32 soient différentes afin de limiter le risque de déformation de la face avant 10, en particulier, de l'angle pantoscopique.

La différence de longueur, selon l'axe longitudinal X, entre les tenons 11, 12 est avantageuse étant donné qu'elle permet à chaque branche 21, 22 d'être, en position pliée, dans un plan différent de l'autre branche 21, 22. Autrement dit, en position pliée, les branches 21, 22 ne sont que faiblement ou pas en contact comme illustré à la figure 4. De manière avantageuse, l'angle pantoscopique de la face avant 10 est protégé.

De préférence, les articulations 31, 32 se présentent sous la forme de charnière ayant la même plage angulaire de rotation. De préférence, chaque articulation comporte une butée à la fermeture de manière à limiter l'angle de fermeture et réduire le contact entre les branches pour réduire la transmission des efforts.

Dans cet exemple, les articulations 31, 32 permettent une articulation dans le même plan horizontal mais il va de soi qu'elles pourraient être décalées verticalement, c'est à dire, s'articuler respectivement dans deux plans horizontaux décalés verticalement.

Selon un aspect de l'invention, les articulations 31, 32 sont non-réglables, c'est-à-dire, fixes.

Selon un aspect de l'invention, la première articulation 31 et/ou la deuxième articulation 32 se présente sous la forme d'un mécanisme, comportant un axe d'articulation, qui est relié d'une part à la face avant 10 et, d'autre part, à la première branche 21 et/ou la deuxième branche 22. Ainsi, une articulation mécanique peut notamment être montée de manière rapportée sur la face avant 10. Selon un autre aspect de l'invention, la première articulation 31 et/ou la deuxième articulation 32 se présente sous la forme d'une simple tige/vis formant l'axe d'articulation.

Dans cet exemple, on désigne par articulation une articulation de branche, c'est-à-dire, configurée pour permettre un pliage d'une branche 21/22 par rapport à la face avant 10.

Dans le cas présent, étant donné que le premier tenon 11 est plus court, la première branche 21 doit être pliée avant la deuxième branche 22 pour éviter tout contact. La deuxième branche 22 est ainsi positionnée à distance en arrière de la première branche 21 comme illustré à la figure 4. De manière avantageuse, comme cela sera présenté par la suite, la deuxième branche 22 remplit une fonction d'amortisseur en évitant de transmettre intégralement tout effort de compression longitudinal F à la première branche 21. Il en résulte que tout effort de compression longitudinal F n'est plus transmis à divers points de la face avant 10 qui évite ainsi de se déformer.

Les tenons 11, 12 et les branches 21, 22 de la paire de lunettes 1 vont être dorénavant présentés en détails.

Selon un aspect de l'invention, la première branche 21 est plus longue que la deuxième branche 22 afin de compenser le fait que le premier tenon 11 est plus court que le deuxième tenon 12. Dans cet exemple, l'ensemble du premier tenon 11 et de la première branche 21 possède la même longueur que l'ensemble du deuxième tenon 12 et de la deuxième branche 22. Ainsi, en position portée, la paire de lunettes 1 est symétrique, ce qui assure des fonctionnalités analogues à l'art antérieur et un confort optimal pour l'utilisateur.

Dans cet exemple, les tenons 11, 12 sont alignés avec les branches 21, 22 en position dépliée. Autrement dit, les branches 21, 22 sont directement en contact avec les tenons 11, 12 en position dépliée et les branches 21, 22 ne sont pas en contact avec la face avant 10.

De manière préférée, chaque branche 21, 22 est exempte d'articulation interne. Sa fabrication est avantageusement traditionnelle, seule sa longueur devant être adaptée. De préférence encore, la paire de lunettes 1 ne comporte que deux articulations 31, 32, une associée à chaque branche 21, 22.

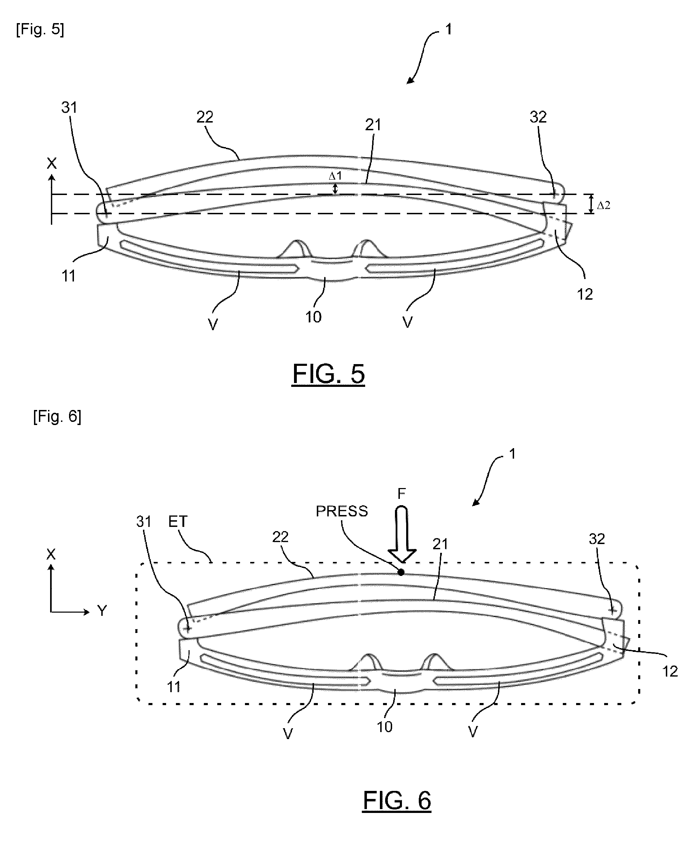

Selon un aspect préféré, la première branche 21 possède une épaisseur déterminée Δ1, en particulier mesurée à un point central comme illustré à la figure 5. L'écart Δ2 entre les positions longitudinales des articulations 31, 32 est supérieur à ladite épaisseur déterminée Δ1 de manière à éviter un contact entre la première branche 21 et la deuxième branche 22. Ainsi, toute transmission d'effort entre la deuxième branche 22 et la première branche 21 est limitée lorsque la paire de lunettes P est pliée.

De préférence, l'écart Δ2 entre les positions longitudinales des articulations 31, 32 est compris entre 0.5 mm et 10 mm, de préférence, compris entre 1 mm et 7 mm, de préférence encore compris entre 2 mm et 5 mm. Une telle plage d'écarts permet, d'une part, de limiter la déformation de la face avant 10 et, d'autre part, de limiter l'encombrement axial de la paire de lunettes P. Un tel compromis est ainsi optimal.

En position fermée, la première branche 21 est positionnée dans un premier plan (parallèle à XZ) tandis que la deuxième branche 22 est positionnée dans un deuxième plan parallèle et distinct du premier plan. Les deux plans sont distants d'un écart correspondant à l'écart de longueur entre les tenons 11, 12.

Il a été présenté une paire de lunettes 1 dans laquelle le premier tenon 11 (le plus court) est le tenon droit. Un tel positionnement est avantageux pour les personnes droitières. Il va de soi que l'inverse est possible.

Il va dorénavant être présenté un exemple de mise en œuvre d'une méthode de pliage des branches 21, 22 en référence à la figure 4. Initialement, les branches 21, 22 sont en position dépliée D, la méthode comprend une étape de pliage de la première branche 21 contre la face avant 10 puis une étape de pliage de la deuxième branche 22. Lorsque les deux branches 21, 22 sont en position pliée P, la deuxième branche 22 est distante de la première branche 21, ce qui permet de limiter la transmission des efforts et, par voie de conséquence, la déformation de la face avant 10.

A titre d'exemple, en référence à la figure 6, lors du rangement de la paire de lunettes P dans un étui ET, un effort de compression longitudinal F s'applique sur la deuxième branche 22 selon un point de pression PRESS sans transmission à la branche latérale la plus en avant (ici la branche droite 21) étant donné que les branches 21, 22 ne sont pas en contact. A la manière d'un amortisseur, la branche 22, située la plus en arrière, absorbe l'effort de compression longitudinal F qui n'est pas transmis à plusieurs points de la face avant 10 et évite sa déformation.

Grâce à l'invention, la durée de vie d'une paire de lunettes P est augmentée en réduisant le risque de déformation de la face avant 10. Il en va de même des axes des articulations 31, 32 qui ne sont pas modifiés. La position des verres V demeure optimale, ce qui offre à l'utilisateur une correction optique pérenne dans le temps. Enfin, d'un point de vue industriel, le coût d'une telle paire de lunettes 1 est du même ordre que celui d'une paire de lunettes classique, c'est-à-dire, avec des articulations 31, 32 ayant la même position longitudinale.

De plus, l'invention s'applique à tout type d'articulation, par exemple, une charnière classique, à gonds ou permettant la sur-ouverture.

En référence aux figures 7 à 10, l'invention s'applique également à une paire de lunettes du type « percée clipsée » dans laquelle la face avant 10 comporte uniquement des tenons 11, 12 fixés aux verres V et un pont central fixé aux verres V. Autrement dit, pour une telle face avant, les verres V ne sont pas montés dans des cercles. L'invention s'applique ainsi à tout type de face avant 10.

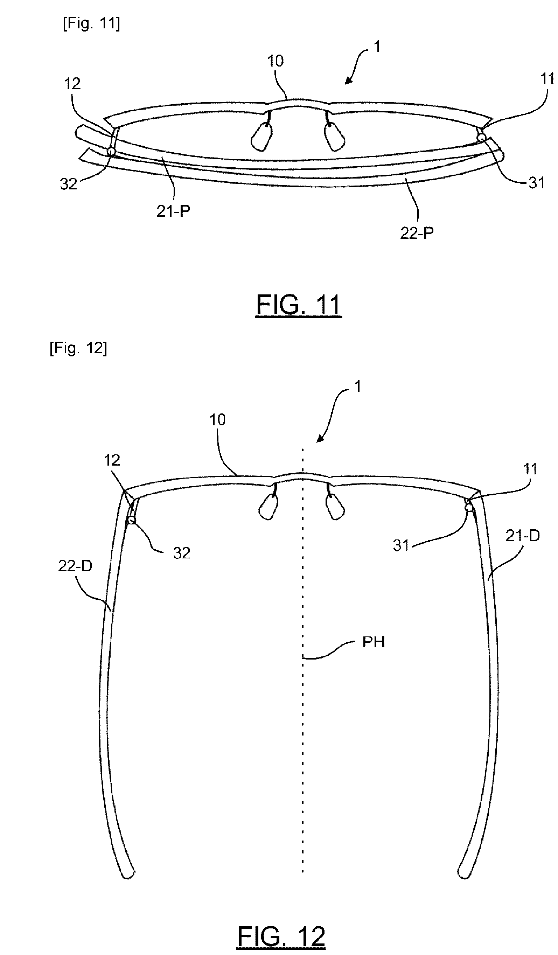

En référence aux figures 11 et 12, l'invention s'applique également à une paire de lunettes 1 dont les articulations 31, 32 sont décalées par rapport aux branches 21, 22 en position dépliée. Les articulations 31, 32 ne s'étendent pas dans le prolongement des branches 21, 22 en position dépliée mais sont décalées entre les branches 21, 22 afin de former des articulations déportées permettant aux branches 21, 22 d'être directement en contact avec la face avant 10 en position dépliée. Cela permet avantageusement de conserver des branches 21, 22 de longueurs identiques en décalant les articulations 31, 32 vers le centre de la paire de lunettes 1, c'est-à-dire, vers un plan orthogonal PH à la face avant 10 qui la divise de manière sensiblement symétrique (Figure 12). Les branches 21, 22 sont identiques, ce qui facilite l'industrialisation.

## Revendications

1. Paire de lunettes (1), s'étendant selon un premier axe longitudinal X d'arrière en avant, comprenant :
- une face avant symétrique (10) comprenant deux verres (V),
- un premier tenon (11) et un deuxième tenon (12) qui sont reliés à la face avant (10),
- une première branche (21) et une deuxième branche (22) qui sont respectivement reliées au premier tenon (11) et au deuxième tenon (12) par l'intermédiaire d'une première articulation (31) et d'une deuxième articulation (32), la première articulation (31) et la deuxième articulation (32) étant non-réglables, la première branche (21) comportant une portion curviligne pour contourner l'oreille du porteur, la deuxième branche (22) comportant une portion curviligne pour contourner l'oreille du porteur,
- paire de lunettes **caractérisée par le fait que** l'écart (Δ2) entre les positions longitudinales des articulations (31, 32) est compris entre 0.5 mm et 10 mm afin de limiter le risque de déformation de la face avant (10) suite à un effort de compression longitudinal.

2. Paire de lunettes (1) selon la revendication 1, dans laquelle le premier tenon (11) est plus court que le deuxième tenon (12) de manière à ce que les positions longitudinales des articulations soient différentes.

3. Paire de lunettes (1) selon l'une des revendications 1 à 2, dans laquelle la première branche (21) ayant une épaisseur déterminée (Δ1), l'écart (Δ2) entre les positions longitudinales des articulations (31, 32) est supérieur à l'épaisseur déterminée (Δ1) de manière à éviter un contact entre la première branche (21) et la deuxième branche (22).

4. Paire de lunettes (1) selon l'une des revendications 1 à 3, dans laquelle l'écart (Δ2) entre les positions longitudinales des articulations (31, 32) est compris entre 1 mm et 7 mm, de préférence, compris entre 2 mm et 5 mm.

5. Paire de lunettes (1) selon l'une des revendications 1 à 4, dans laquelle la première branche (21) est plus longue que la deuxième branche (22).

6. Paire de lunettes (1) selon la revendication 5, dans laquelle l'ensemble du premier tenon (11) et de la première branche (21) possède la même longueur que l'ensemble du deuxième tenon (12) et de la deuxième branche (22).

7. Paire de lunettes (1) selon l'une des revendications 1 à 6, dans laquelle la première branche (21) et la deuxième branche (22) possèdent la même longueur.

8. Paire de lunettes (1) selon la revendication 7, dans laquelle la première branche (21) et la deuxième branche (22) sont directement en contact avec la face avant (10) en position ouverte de la première branche (21) et de la deuxième branche (22).

9. Paire de lunettes (1) selon l'une des revendications 1 à 8, dans laquelle la première branche (21) est la branche droite.

10. Paire de lunettes (1) selon l'une des revendications 1 à 9, dans laquelle la première articulation (31) et/ou la deuxième articulation (32) se présente sous la forme d'un mécanisme, comportant un axe d'articulation, qui est relié d'une part à la face avant (10) et d'autre part à la première branche (21) et/ou la deuxième branche (22).

11. Méthode de pliage des branches (21, 22) d'une paire de lunettes (1) selon l'une des revendications 1 à 10, les branches (21, 22) étant en position dépliée, la méthode comprenant:
- Une étape de pliage de la première branche (21) contre la face avant (10) puis,
- Une étape de pliage de la deuxième branche (22), la deuxième branche (22) étant distante de la première branche (21) en position pliée.

## Patentansprüche

1. Brille (1), die sich gemäß einer ersten Längsachse X von hinten nach vorne erstreckt, die umfasst:
- eine symmetrische Vorderseite (10), die zwei Gläser (V) umfasst,
- einen ersten Zapfen (11) und einen zweiten Zapfen (12), die mit der Vorderseite (10) verbunden sind.
- einen ersten Bügel (21) und einen zweiten Bügel (22), die jeweils mit dem ersten Zapfen (11) und mit dem zweiten Zapfen (12) mittels eines ersten Gelenks (31) und eines zweiten Gelenks (32) verbunden sind, wobei das erste Gelenk (31) und das zweite Gelenk (32) nicht einstellbar sind, wobei der erste Bügel (21) einen gebogenen Abschnitt aufweist, um um das Ohr des Trägers herumgeführt zu werden und der zweite Bügel (22) einen gebogenen Abschnitt aufweist, um um das Ohr des Trägers herumgeführt zu werden,
- wobei die Brille **dadurch gekennzeichnet ist, dass** der Abstand (Δ2) zwischen den Längspositionen der Gelenke (31, 32) zwischen 0,5 mm und 10 mm liegt, um das Risiko einer Verformung der Vorderseite (10) infolge einer Längskompression zu begrenzen.

2. Brille (1) nach Anspruch 1, wobei der erste Zapfen (11) kürzer als der zweite Zapfen (12) ist, so dass die Längspositionen der Gelenke unterschiedlich sind.

3. Brille (1) nach einem der Ansprüche 1 bis 2, wobei der erste Bügel (21) eine bestimmte Dicke (Δ1) aufweist, der Abstand (Δ2) zwischen den Längspositionen der Gelenke (31, 32) größer als die bestimmte Dicke (Δ1) ist, um einen Kontakt zwischen dem ersten Bügel (21) und dem zweiten Bügel (22) zu vermeiden.

4. Brille (1) nach einem der Ansprüche 1 bis 3, wobei der Abstand (Δ2) zwischen den Längspositionen der Gelenke (31, 32) zwischen 1 mm und 7 mm, vorzugsweise zwischen 2 mm und 5 mm, liegt.

5. Brille (1) nach einem der Ansprüche 1 bis 4, wobei der erste Bügel (21) länger als der zweite Bügel (22) ist.

6. Brille (1) nach Anspruch 5, wobei die Anordnung aus dem ersten Zapfen (11) und dem ersten Bügel (21) die gleiche Länge aufweist wie die Anordnung aus dem zweiten Zapfen (12) und dem zweiten Bügel (22).

7. Brille (1) nach einem der Ansprüche 1 bis 6, wobei der erste Bügel (21) und der zweite Bügel (22) die gleiche Länge aufweisen.

8. Brille (1) nach Anspruch 7, wobei der erste Bügel (21) und der zweite Bügel (22) in offener Position des ersten Bügels (21) und des zweiten Bügels (22) in direktem Kontakt mit der Vorderseite (10) stehen.

9. Brille (1) nach einem der Ansprüche 1 bis 8, wobei der erste Bügel (21) der rechte Bügel ist.

10. Brille (1) nach einem der Ansprüche 1 bis 9, wobei das erste Gelenk (31) und/oder das zweite Gelenk (32) in Form eines Mechanismus ausgebildet ist, der eine Gelenkachse aufweist, der einerseits mit der Vorderseite (10) und andererseits mit dem ersten Bügel (21) und/oder mit dem zweiten Bügel (22) verbunden ist.

11. Verfahren zum Einklappen der Bügel (21, 22) einer Brille (1) nach einem der Ansprüche 1 bis 10, wobei sich die Bügel (21, 22) in der ausgeklappten Position befinden, wobei das Verfahren umfasst:
- einen Schritt, bei dem der erste Bügel (21) gegen die Vorderseite (10) eingeklappt wird, dann
- einen Schritt, bei dem der zweite Bügel (22) eingeklappt wird, wobei der zweite Bügel (22) in eingeklappter Position vom ersten Bügel (21) entfernt ist.

## Claims

1. A pair of spectacles (1), extending along a first longitudinal axis X from the rear to the front, comprising:
- a symmetrical front face (10) comprising two lenses (V),
- a first tenon (11) and a second tenon (12) connected to the front face (10),
- a first temple (21) and a second temple (22) that are respectively connected to the first tenon (11) and the second tenon (12) via a first hinge (31) and a second hinge (32), the first hinge (31) and the second hinge (32) being non-adjustable, the first temple (21) comprising a curved portion to wrap around the ear of the wearer, the second temple (22) comprising a curved portion to wrap around the ear of the wearer,
- a pair of spectacles **characterized in that** the distance (A2) between the longitudinal positions of the hinges (31, 32) is between 0.5 mm and 10 mm in order to limit the risk of deformation of the front face (10) as a result of a longitudinal compressive load.

2. The pair of spectacles (1) according to claim 1, wherein the first tenon (11) is shorter than the second tenon (12) such that the longitudinal positions of the hinges are different.

3. The pair of spectacles (1) according to one of claims 1 to 2, wherein the first temple (21) has a predetermined thickness (Δ1), the distance (Δ2) between the longitudinal positions of the hinges (31, 32) is greater than the specified thickness (Δ1) so as to prevent contact between the first temple (21) and the second temple (22).

4. The pair of spectacles (1) according to any one of claims 1 to 3, wherein the distance (Δ2) between the longitudinal positions of the hinges (31, 32) is between 1 mm and 7 mm, preferably between 2 mm and 5 mm.

5. The pair of spectacles (1) according to any one of claims 1 to 4, wherein the first temple (21) is longer than the second temple (22).

6. The pair of spectacles (1) according to claim 5, wherein the assembly of the first tenon (11) and the first temple (21) has the same length as the assembly of the second tenon (12) and the second temple (22).

7. The pair of spectacles (1) according to any one of claims 1 to 6, wherein the first temple (21) and the second temple (22) have the same length.

8. The pair of spectacles (1) according to claim 7, wherein the first temple (21) and the second temple (22) are in direct contact with the front face (10) in the open position of the first temple (21) and the second temple (22).

9. The pair of spectacles (1) according to any one of claims 1 to 8, wherein the first temple (21) is the right temple.

10. The pair of spectacles (1) according to any one of claims 1 to 9, wherein the first hinge (31) and/or the second hinge (32) is in the form of a mechanism comprising a hinge pin, which is connected on one side to the front face (10) and on the other side to the first temple (21) and/or the second temple (22).

11. A method for folding the temples (21, 22) of a pair of spectacles (1) according to any one of claims 1 to 10, the temples (21, 22) being in an unfolded position, the method comprising:
- A step of folding the first temple (21) against the front face (10), and then,
- A step of folding the second temple (22), the second temple (22) being spaced apart from the first temple (21) in the folded position.
